# EUROPEAN PATENT SPECIFICATION

(11) **EP 2 836 345 B1**
(45) Date of publication and mention of the grant of the patent: **15.03.2017**
(21) Application number: 13714610.6
(22) Date of filing: 28.03.2013
(51) Int. Cl.: B29B 11/16, B29C 53/04

(54) **METHOD AND DEVICE FOR PRODUCING A TEXTILE PREFORM**
VERFAHREN UND VORRICHTUNG ZUR HERSTELLUNG EINER TEXTILVORFORM
PROCÉDÉ ET DISPOSITIF PERMETTANT DE PRODUIRE UNE PRÉFORME TEXTILE

(30) Priority: 12.04.2012 DE 102012206020; 12.04.2012 US 201261623102 P; 15.01.2013 US 201361752477 P
(43) Date of publication of application: 18.02.2015
(73) Proprietor: Airbus Operations GmbH, 21129 Hamburg (DE)
(72) Inventor: WITTE, Tassilo, 21680 Stade (DE); GILLESSEN, Alexander, 21680 Stade (DE); HUELNHAGEN, Jan, 52064 Aachen (DE)
(74) Representative: Isarpatent
(86) International application number: PCT/EP2013/056697
(87) International publication number: WO 2013/152961

(56) References cited:
- EP-A1- 1 995 040
- WO-A1-2011/067146
- DE-A1-102008 057 782

## Description

The present invention relates to a method for manufacturing a textile preform and to a device for producing a textile pre-form.

Although applicable to any aircraft or spacecraft, the present invention is described in greater detail in relation to an aircraft by way of example.

In the manufacture of fibre composite components, in aircraft construction, what are known as prepreg materials are often used. For example, fibre fabrics pre-impregnated with a matrix material are referred to as prepreg material. However, prepreg material of this type has some drawbacks in relation to the production thereof, such as high costs, limited storage life, and high cycle time during processing. An advantageous alternative is for example what is known as resin transfer moulding (RTM). In this context, a dry, that is to say matrix-free, fibre preform is impregnated with matrix material in a mould. A preform of this type is for example of a shape close to the final contour, and is kept in shape for example by means of stitches and/or by means of a thermoplastic binder.

A method and a device for producing preforms of this type is disclosed for example in DE 10 2010 014 704 A1. In this context, in a first step continuously introduced fibre layers are deformed transversely in a predetermined manner, and in a second step the resulting profile is selectively longitudinally curved. However, this system can only produce preforms which are of the same profile over the entire length thereof. This system is further inflexible because layers having a 0° fibre orientation, which are provided in the layer construction, are also deformed; since they cannot be compressed or stretched in the longitudinal direction, they always have to be positioned in the neutral fibre. In particular in aircraft construction, components such as formers are required which are of a variable profile, that is to say in particular a variable height, over the length or the periphery thereof. The requirement for a reduced profile height occurs for reasons of space, for example in the region of a floor structure installed in a fuselage cell.

WO 2011/067146 A1 discloses a method for producing a textile preform for forming a structural component of an aircraft or spacecraft.

The object of the present invention is therefore to provide a textile preform which is of a variable profile over the length thereof.

This object is achieved according to the invention by a method having the features of claim 1 and/or by a device having the features of claim 12.

Accordingly, a method for producing a textile preform is provided, comprising the following method steps: manufacturing a multi-layer fibre fabric, which comprises a first flange portion and a web portion connected to the first flange portion; deforming a first fibre layer of the first flange portion with respect to the web portion, in such a way that the first fibre layer is at a first flange portion angle to the web portion, a web height of the web portion being set in a variable manner during the deformation of the first fibre layer; and depositing a unidirectional fibre fabric only on the deformed first fibre layer of the first flange portion.

Accordingly, a device for producing a textile preform is further provided, comprising: a support means, for having a multi-layer fibre fabric deposited thereon which comprises a first flange portion and a web portion connected to the first flange portion; an adjustable guide means for deforming a first fibre layer of the first flange portion with respect to the web portion in such a way that the first fibre layer is at a first flange portion angle to the web portion, it being possible to set a web height of the web portion in a variable manner during the deformation of the first fibre layer; and a deposition means for depositing a unidirectional fibre fabric only on the deformed first fibre layer of the first flange portion.

The idea behind the present invention is to deform the fibre layers of the fibre fabric individually, it being possible as a result to set the web height as desired and to vary it during the deformation of the fibre layer. The unidirectional fibre layer, which cannot be deformed in any desired manner, is in each case only deposited after the deformation of the fibre layer. As a result, it is possible to produce a preform which has a variable web height over the periphery and can thus be used very flexibly. Thus, instead of deforming the entire fibre fabric from the start, only some of the fibre layers are deformed, and subsequently are preferably fixed, and the unidirectional fibre fabric is adjoined later on.

Advantageous embodiments of the method specified in claim 1 and the device specified in claim 12 may be found in the dependent claims.

In accordance with a preferred embodiment of the method, after the deposition of the unidirectional fibre fabric, a second fibre layer of the first flange portion is deformed with respect to the web portion, in such a way that the second fibre layer is at the first flange portion angle to the web portion, the second fibre layer being positioned on the unidirectional fibre fabric after the deformation. In particular, any desired number of fibre layers of the first flange portion is deformed in such a way that the fibre layers are at the first flange portion angle to the web portion, and after each deformed fibre layer, a unidirectional fibre fabric is deposited only on the correspondingly deformed fibre layer of the first flange portion. As a result, it is possible to deform fibre fabrics comprising any desired number of fibre layers. This makes flexible use of the method possible.

In accordance with a further preferred embodiment of the method, the unidirectional fibre fabric and the deformed fibre layer are fixed by means of a thermoplastic binder after or during the deposition of the unidirectional fibre fabric on the deformed first fibre layer of the first flange portion. As a result, the manageability of the produced preform is improved.

In accordance with a further preferred embodiment of the method, during the manufacture of the multi-layer fibre fabric, a second flange portion is provided, the web portion being arranged between the first flange portion and the second flange portion and interconnecting the flange portions. Preferably, during the manufacture of the fibre fabric, fibre layers of the second flange portion are deformed with respect to the web portion in such a way that the second flange portion is at a second flange portion angle to the web portion and is of a predetermined second flange height. As a result, it is advantageously possible to produce a Z-shaped or U-shaped preform depending on the field of application.

In accordance with a further preferred embodiment of the method, during the manufacture of the multi-layer fibre fabric, the fibre layers of the second flange portion and the web portion are fixed at least in portions by means of a thermoplastic binder. As a result, the manageability of the produced preform is improved.

In accordance with a further preferred embodiment of the method, the first flange portion is trimmed to a predetermined second flange height. As a result, a predetermined flange height of the second flange portion is ensured over the entire length of the preform.

In accordance with a further preferred embodiment of the method, the multi-layer fibre fabric is curved with a fibre fabric radius of curvature during the manufacture thereof. This makes it possible to produce a curved preform, and as a result it can advantageously be made use of in curved structures, in particular in fuselage cells.

In accordance with a further preferred embodiment of the method, the fibre fabric is deposited on a support means before the deformation of the first fibre layer of the first flange portion. As a result, the processability of the fibre fabric is improved.

In accordance with a further preferred embodiment of the method, the fibre layers of the first flange portion are deformed by means of a guide means, the web height of the web portion being set in a variable manner in that the guide means is displaced towards or away from the support means in a transverse direction thereof. This makes it possible to set the web height in a particularly flexible manner and to automate the method.

In accordance with a preferred embodiment of the device, the guide means can be displaced in a longitudinal direction of the support means. In particular, the guide means can be displaced in a transverse direction of the support means, it being possible to set the web height of the web portion in a variable manner in that the guide means can be displaced towards or away from the support means in the transverse direction. As a result, it is possible to set the web height of the web portion in a flexible manner during the deformation.

In accordance with a preferred embodiment of the device, the support means is curved with a fibre fabric radius of curvature. This makes it possible to produce a curved preform, and as a result it can advantageously be made use of in curved structures, in particular in fuselage cells.

In the following, the invention is described in greater detail by way of embodiments, with references to the appended schematic drawings.

In the schematic drawings:
Fig. 1 is a plan view of a preferred embodiment of a device for producing a textile preform;
Fig. 2 is a sectional view of the preferred embodiment of the device along the section line II-II of Fig. 1;
Fig. 3 is a further plan view of the preferred embodiment of the device according to Fig. 1;
Fig. 4 is a sectional view of the preferred embodiment of the device along the section line IV-IV in Fig. 3;
Fig. 5 is a sectional view of the preferred embodiment of the device along the section line V-V in Fig. 3;
Fig. 6 is a view of a guide plate of the preferred embodiment of the direction in the view VI of Fig. 3;
Fig. 7 is a plan view of a multi-layer fibre fabric;
Fig. 8 is a sectional view of the multi-layer fibre fabric along the section line VIII-VIII of Fig. 7;
Fig. 9 is a sectional view of a development of the multi-layer fibre fabric according to Fig. 7;
Fig. 10A to 10E are method steps of a method for producing a textile preform; and
Fig. 11A and 11B are method steps of the method for producing a textile preform.

In the drawings, like reference numerals denote like or functionally equivalent components, unless stated otherwise.

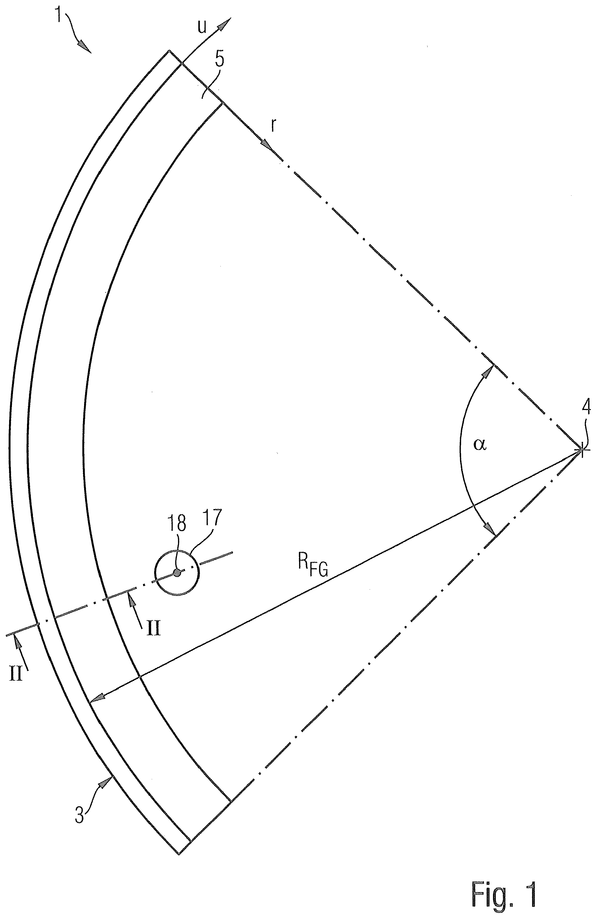

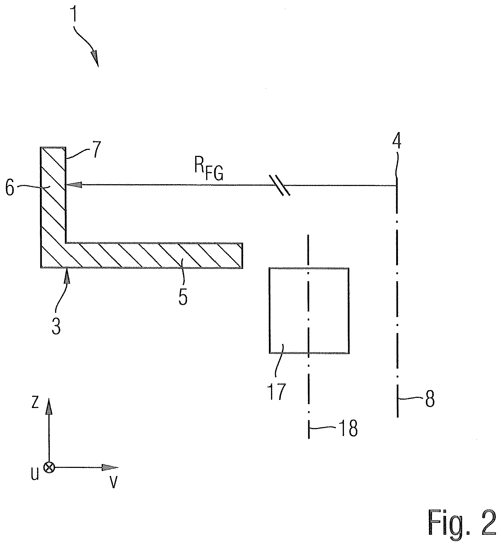

Fig. 1 and 2 are a plan view and a sectional view respectively of a preferred embodiment of a device 1 for producing a textile preform 2. The preform 2 preferably does not comprise any matrix material. The preform 2 may however comprise a preferably thermoplastic binder, in particular a pulverulent thermoplastic binder, which can be melted on by introducing heat energy. The preform 2 preferably has a predetermined cross-sectional profile, which may for example be L-shaped, Z-shaped or U-shaped. The preform 2 is preferably in the form of what is known as a dry preform 2, and can be infiltrated with a matrix material, for example by what is known as a resin infusion method, in particular by what is known as a resin transfer moulding (RTM) method. For example, a curable thermosetting material and/or a thermoplastic material may be used as the matrix material. After the preform 2 has been infiltrated with the matrix material and said material has cured, said preform forms a fibre composite component which can be processed further, for example a stringer or a stringer portion of a fuselage cell of an aircraft or spacecraft. The textile preform 2 is preferably used in the field of aviation and aerospace.

The device 1 for producing the textile preform 2 preferably comprises a support means 3, which is for example in the form of a support plate 3. The support means 3 may be linear or curved in form. Preferably, the support means 3 is curved with a fibre fabric radius of curvature R_{FG}. The fibre fabric radius of curvature R_{FG} has a centre of curvature 4. In particular, the support means 3 has an angle of curvature α of for example approximately 60° or 90°. In this context, "approximately" means that the angle of curvature α is either 60±10° or 90±10°, in particular ±5°. Alternatively, the angle of curvature α may be of any desired size. The preferably arc-shaped support means 3 preferably comprises an arc-shaped deposition surface 5 and a rear wall 6. The rear wall 6 is preferably of a cylindrical shell shape. The rear wall 6 is preferably formed integrally with the deposition surface 5. In the cross-section of Fig. 2, the support means 3 preferably has an L-shaped cross-section. The fibre fabric radius of curvature R_{FG} is measured from the centre of curvature 4 to a cylindrical inner face 7 of the rear wall 6. The support means 3 has a longitudinal or peripheral direction u, a transverse or radial direction r and a vertical direction z. The peripheral direction u preferably extends on the arc determined by the fibre fabric radius of curvature R_{FG}, the radial direction r is preferably parallel thereto, and the vertical direction z is preferably arranged parallel to a central axis 8 of the cylindrical rear wall 6. The central axis 8 extends in particular through the centre of curvature 4. The edges of the support means 3, in particular at the contact point of the deposition surface 5 and the rear wall 6, are preferably rounded. Alternatively, the support means 3 may be formed as a linear support means 3, that is to say without any curvature. Preferably, the support means 3 is mounted stationary.

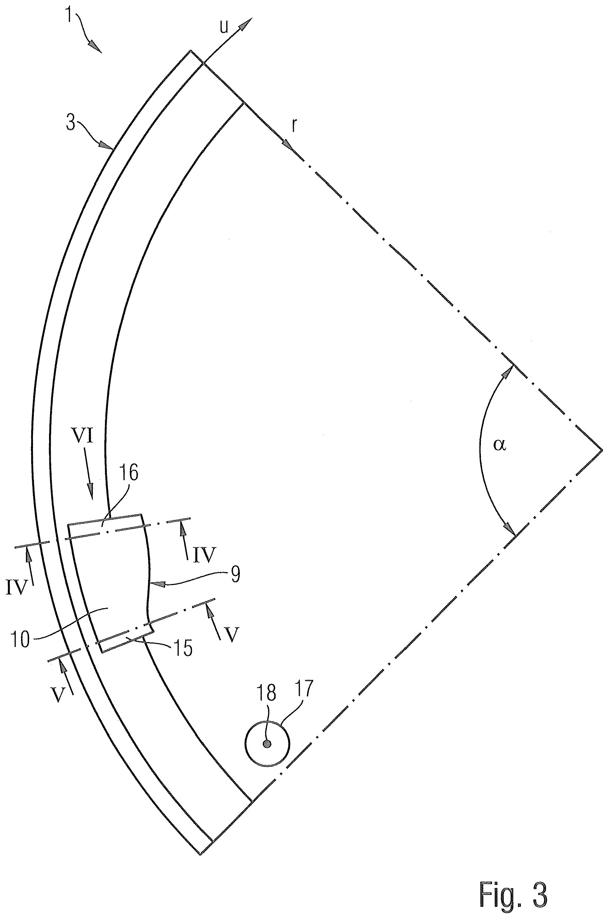

The device 1 further comprises, as shown in Fig. 3, an adjustable guide means 9. By means of a drive means (not shown), the guide means 9 can be displaced towards or away from the support means in the radial direction r of the support means 3. By means of this drive means, or by means of a further drive means, the guide means 9 can additionally be displaced as desired along the peripheral direction u of the support means 3. The displacement of the guide means in the radial direction r and in the peripheral direction u may take place simultaneously or in succession. The drive means is/are formed appropriately for this purpose. The guide means 9 can be guided along the support means 3 by means of a guide. The guide may be an integral part of the drive means. The guide means 9 is preferably fixed in the z-direction. The guide means 9 can thus be displaced in the peripheral direction u of the support means 3, and simultaneously be moved continuously towards or away from the support means 3 in the radial direction r of the support means 3.

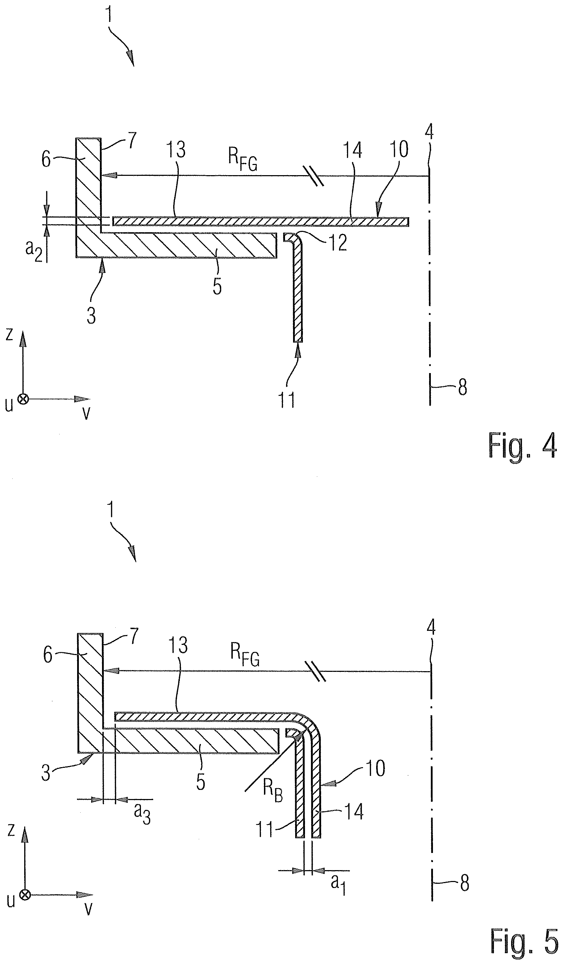

As shown in Fig. 4 and 5, the guide means 9 comprises at least one guide plate 10, in particular an outer or first guide plate 10, and in a preferred embodiment of the device 1 an optional further, in particular second or inner, guide plate 11. The guide plates 10, 11 are preferably spaced apart in the radial direction r by an, in particular first, distance a₁. The second guide plate 11 is of an approximately rectangular cross-section. The guide plate 11 preferably follows the curvature of the support means 3. The guide plate 11 is in particular in the form of a portion of a hollow cylinder having the central axis 8. At an end portion 12 of the guide plate 11, facing the support means 3, the guide plate 11 preferably has a rounding, the radius of which is matched to a bending radius R_{B} of the first guide plate 10.

The first guide plate 10 preferably comprises a support portion 13 which has a curvature corresponding to the support means 3. The support portion 13 is preferably arranged with respect to the support means 3 so as to be spaced apart from the deposition surface 5 by an, in particular second, distance a₂ and from the inner face 7 of the rear wall 6 by an, in particular third, distance a₃. The distances a₂ and a₃ are preferably continuously adjustable depending on the thickness of the material to be processed or of the preform 2 to be produced. The guide plate 10 further comprises a deformation portion 14. The deformation portion 14 is arranged approximately parallel to and spaced apart from the deposition surface 5, at least in portions, and approximately parallel to and spaced apart from the second guide plate 11, that is to say approximately parallel to the rear wall 6, at least in portions.

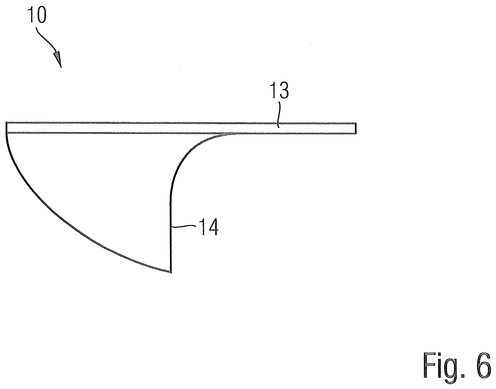

At a first end portion 15 of the guide plate 10, the support portion 13 and the deformation portion 14 according to Fig. 5 form an L-shape, substantially in the cross-section of the guide plate 10. Proceeding from the first end portion 15 having the L-shape to the second end portion 16, the deformation portion 14 warps continuously, in such a way that the support portion 13 and the deformation portion 14 at the second end portion 16 of the guide plate 10 approximately form a rectangular cross-section according to Fig. 4. Fig. 6 is a front view, in accordance with the view VI of Fig. 3, merely of the guide plate 10, to illustrate the deformation or twisting of the guide plate 10 as described above. Preferably, the guide plates 10, 11 are rigidly interconnected to form the guide means 9. However, the guide plate 11 is optional and is not absolutely necessary. The device 1 may comprise a plurality of guide means 9.

The device 1 preferably further comprises a deposition means 17, which is suitable for depositing a fibre fabric. The device 1 further comprises a press-on and/or fixing means, which can be integrated into the deposition device 17. The deposition device 17 is preferably in the form of a deposition roller 17 having a central axis 18. The central axis 18 is preferably arranged parallel to the central axis 8. The deposition device 17 can preferably be displaced in the u, r and z directions. This can be done simultaneously or in succession. A drive means may be provided for this purpose.

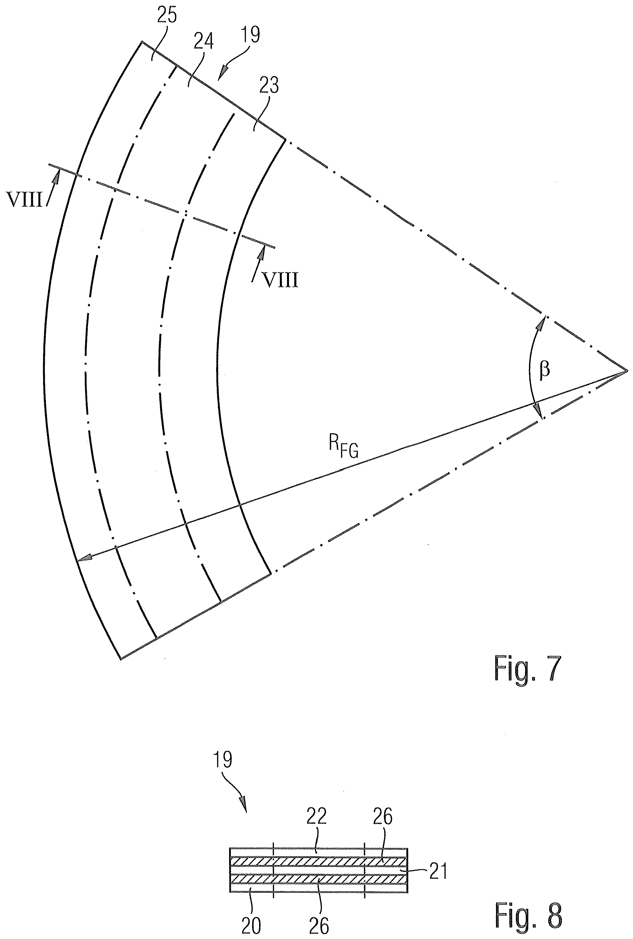

The operation of the device 1 and a method for producing a textile preform 2 are described in the following. Initially, a multi-layer fibre fabric 19 is provided or manufactured. Fig. 7 and 8 show an example embodiment of a fibre fabric 19 of this type. The fibre fabric 19 preferably comprises a plurality of fibre layers 20, 21, 22. There may be any desired number of fibre layers 20, 21, 22. Each of the fibre layers 20, 21, 22 comprises fibres which are arranged in a defined fibre direction in each case. The fibre layers 20, 21, 22 are preferably sewn together. The fibre fabric 19 is preferably in the form of what is known as a non-crimp fabric cluster (NCF cluster). The fibre fabric 19 may for example be of a square or alternatively a curved shape. In the following, a fibre fabric 19 of a curved shape is discussed. The fibre fabric has the fibre fabric radius of curvature R_{FG} and an angle of curvature β. The angle of curvature β may correspond to the angle of curvature α of the support means 3. The individual fibre layers 20, 21, 22 extend, in particular over the whole area, over an entire surface area of the fibre fabric 19. The fibre fabric 19 preferably comprises a first flange portion 23 and a web portion 24 connected to the first flange portion 23. Preferably, the multi-layer fibre fabric 19 comprises a second flange portion 25, the web portion 24 being arranged in particular between the first flange portion 23 and the second flange portion 25 and interconnecting the two flange portions 23, 25. The fibre layers 20, 21, 22 of the fibre fabric 19 extend, preferably over the whole area, over the web portion 24 and the flange portions 23 and 25, that is to say the web portion 24 and the flange portions 23, 25 are preferably formed integrally. Preferably, the fibre fabric 19 comprises a pulverulent binder 26, which is arranged preferably over the whole area between the fibre layers 20, 21, 22 and which is preferably in the form of a thermoplastic and can be melted on by introducing heat so as to interconnect or fix together the fibre layers 20, 21, 22 at least in portions.

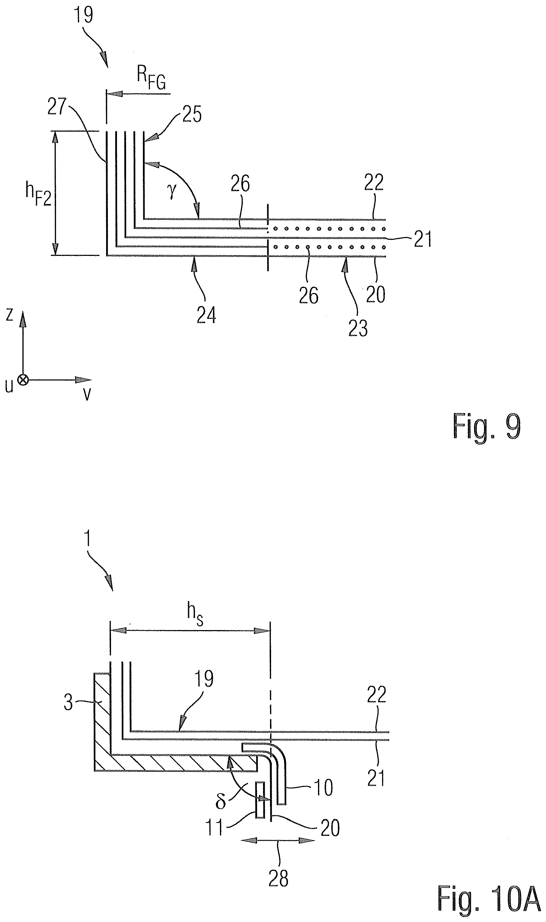

During the manufacture or preparation of the fibre fabric 19, the fibre layers 20, 21, 22 of the second flange portion 25 can be deformed with respect to the web portion 24 in such a way that the second flange portion 25 is at an, in particular second, flange portion angle γ to the web portion. The flange portion angle γ of the second flange portion 25 is preferably approximately 90°. The flange portion angle γ may be of any desired size. After the deformation, the second flange portion 25 is approximately in the form of a hollow cylinder. Fig. 9 illustrates a fibre fabric comprising a deformed second flange portion 25. The second flange portion 25 is of a predetermined flange height h_{F2}, which is preferably constant over the entire peripheral direction of the fibre fabric 19. Preferably, the thermoplastic binder 26 is melted on in the region of the second flange portion 25 and at least in portions in the region of the web portion 24, so as to fix together the second flange portion 25 and the web portion 24. In the region of the first flange portion 23, the binder 26 preferably initially remains in the pulverulent starting state thereof. The multi-layer fibre fabric 19 may preferably be of an L-shaped cross-section, as shown in Fig. 9, the second flange portion 25 preferably forming the shorter limb of the L shape. The second flange portion 25 is optional, as explained above, and may therefore be omitted. The multi-layer fibre fabric 19 has a longitudinal or peripheral direction u, a transverse or radial direction r and a vertical direction z, in a manner analogous to the support means.

For the method steps described in the following, it is assumed that the fibre fabric 19 comprises a previously deformed second flange portion 25. The method can of course also be carried out with fibre fabrics without a second flange portion deformed in this manner. To produce the textile preform 2, the multi-layer fibre fabric 19, prepared as described above, is deposited on the support means 3 of the device 1. In this context, an outer face 27 of the second flange portion 25 of the fibre fabric 19 is preferably positioned against the cylindrical inner face 7 of the rear wall 6 of the support means 3, and the web portion 24 is preferably positioned at least in portions on the deposition surface 5. By means of the guide means 9, in particular the guide plates 10, 11, which is displaced in the peripheral direction u of the support means 3, the first fibre layer 20 of the first flange portion 23 is deformed with respect to the web portion 24, in accordance with Fig. 10A. For this purpose, the guide plate 10 is passed between the first fibre layer 20 and the second fibre layer 21 and displaced along the support means 3 in the peripheral direction u, the first fibre layer 20 being arranged between the first guide plate 10 and the second guide plate 11. The distance a₁ between the guide plates 10, 11 can be adapted in accordance with a thickness of the fibre layer 20, in such a way that the first fibre layer 20 slides between the guide plates 10, 11 easily, but is still reliably guided. The distances a₂ and a₃ are likewise adapted in a corresponding manner in accordance with a thickness of the web portion 24 and a thickness of the second flange portion 25. During the displacement of the guide means 3 in the peripheral direction u of the support means 3, the first fibre layer 20 is initially brought into contact with the second end portion of the first guide plate 10 and deformed by way of the deformation of the first guide plate 10 towards the first end portion 15 thereof.

The first fibre layer 20 is preferably deformed in such a way that it is at an, in particular first, flange portion angle δ to the web portion 24. The first fibre layer 20 is preferably deformed counter to the deformation direction of the second flange portion 25. To produce a U-shaped preform, the fibre layer 20 is deformed in the opposite direction. A web height hₛ of the web portion 24, in particular of the first fibre layer 20 of the web portion 24, is defined by a distance of the deformed fibre layer 20 from the outer face 27 of the fibre fabric 19 in the radial direction r. During the deformation of the fibre layer 20, the guide means 9 can be moved continuously in a radial direction towards and away from the support means 3 in the direction of the arrow 28. Thus, the web height hₛ can be adjusted as desired during the deformation of the fibre layer 20. As a result, it is possible to achieve a variable web height hₛ in the longitudinal or peripheral direction u of the fibre fabric 19.

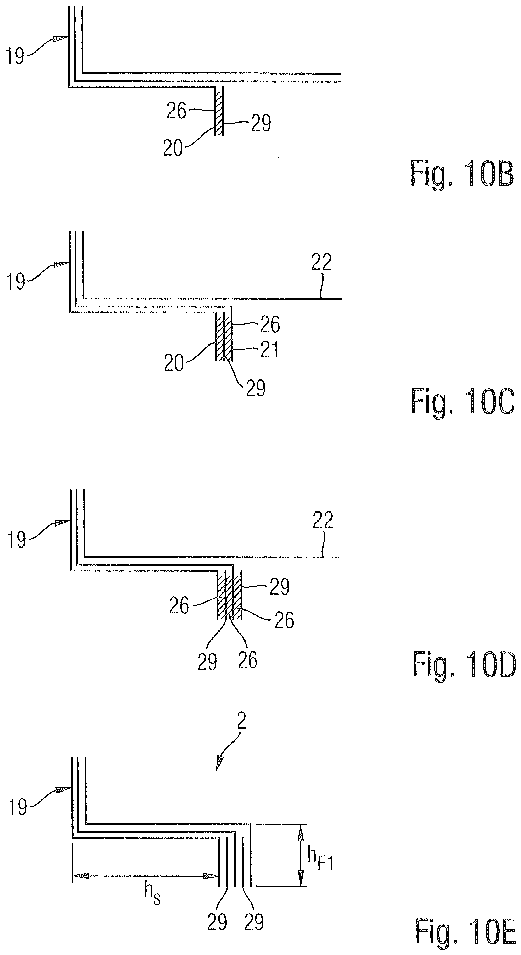

After the deformation of the first fibre fabric 20 of the first flange portion 23, in accordance with Fig. 10B a unidirectional fibre fabric 29 is deposited on the deformed first fibre layer 20 by means of the deposition means 17. For simplicity, the support means 3, the guide means 9 and the deposition means 17 are not shown in Fig. 10B to 10E. A unidirectional fibre fabric should be understood to mean a fibre fabric comprising fibres which merely have one fibre orientation. The fibres are preferably sewn together. The unidirectional fibre fabric 29 may comprise one or a plurality of fibre layers. The unidirectional fibre fabric 29 may also comprise the binder 26. Preferably, the fibres of the unidirectional fibre fabric 29 are orientated in such a way that they are orientated in the vertical direction z of the fibre fabric 19. Preferably, after or during the deposition of the unidirectional fibre fabric 29 on the deformed first fibre layer 20 of the first flange portion 23, the thermoplastic binder 26 is melted on and the deformed fibre layer 20 and the unidirectional fibre fabric 29 are fixed together. Since the fibre layers 20, 21, 22 are deformed individually and the fibre fabric 19 is fanned out during the deformation process, the disclosed method is also referred to as fan deformation.

Preferably, after the deposition of the unidirectional fibre fabric 29, in accordance with Fig. 10C the fibre layer 21 of the first flange portion 20 can be deformed with respect to the web portion 24 by means of the guide means 9 in such a way that the second fibre layer 21 is also at the first flange portion angle δ to the web portion 24. After the deformation, the second fibre layer 21 is preferably positioned on the unidirectional fibre fabric 29. After the deformation of the second fibre layer 21, the unidirectional fibre fabric 29 is preferably again deposited thereon in accordance with Fig. 10D and fixed by melting on the thermoplastic binder 26. Once the unidirectional fibre fabric 29 has been deposited again, in accordance with Fig. 10E the third fibre layer 22 of the first flange portion 23 is preferably deformed in such a way that the third fibre layer 22 is at the first flange portion angle 5 to the web portion 24. After the deformation, the third fibre layer 22 is positioned on the unidirectional fibre fabric 29, which is located between the second fibre layer 21 and the third fibre layer 22. The third fibre layer 22 can also be fixed by melting on the thermoplastic binder 26. Fig. 10E shows the prepared preform 2, which comprises the deformed multi-layer fibre fabric 19 and the unidirectional fibre fabric 29. The preform 2 is thus of a profile or web height hₛ which can be varied as desired over the length or peripheral direction thereof. The fibre layers 20, 21, 22 are preferably deformed by way of a plurality of guide means 9, which can be arranged in succession in the peripheral direction u of the support means 3. The device 1 may further comprise a plurality of deposition means 17 for depositing the unidirectional fibre fabric.

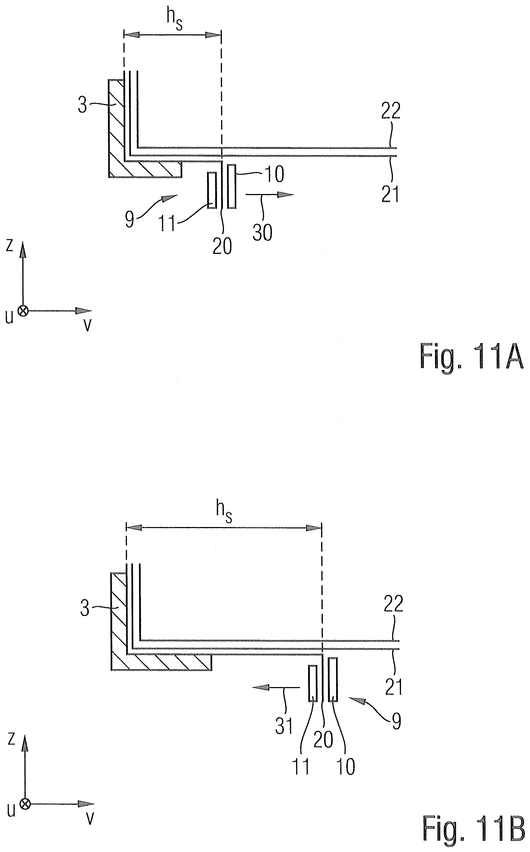

Fig. 11A and 11B illustrate by way of example how the web height hₛ of the web portion 24 can be set in a variable manner. The guide means 9 comprising the guide plates 10, 11 is preferably displaced in the longitudinal or peripheral direction u of the support means 3 at a constant or variable speed. In this context, the fibre layer 20 is preferably guided between the guide plates 10, 11. In accordance with Fig. 11A, by simultaneously displacing the guide means 9 in the transverse direction or radial direction r of the support means 3, the web height hₛ is increased in that the guide means 9 is displaced away from the support means 3 in the direction r, as indicated by the arrow 30. In accordance with Fig. 11B, by simultaneously displacing the guide means 9 in the transverse direction or radial direction r of the support means 3, the web height hₛ is reduced in that the guide means 9 is displaced towards the support means 3 in the direction r, as indicated by the arrow 31.

The steps of deforming any desired number of fibre layers of the multi-layer fibre fabric 19 and depositing the unidirectional fibre fabric 29 between the deformed fibre layers can be repeated any desired number of times, until all of the layers of the multi-layer fibre fabric 19 are deformed. It is also possible to deform a plurality of fibre layers of the fibre fabric 19 simultaneously.

Once all of the layers 20, 21, 22 of the multi-layer fibre fabric 19 are deformed and fixed, the first flange portion 23 can be trimmed to a predetermined web height h_{F1} by means of a cutting means, that is to say cut to size. It is thus possible, by means of the disclosed device 1 or the method, to produce a curved Z-carrier of a freely variable web height hₛ. The disclosed device 1 or method can of course also be used for preforms of different cross-sectional geometries, other than the Z-shaped cross-section of the present example.

The stated materials, numbers and dimensions should be understood as exemplary, and are merely used to explain the embodiments and developments of the present invention.

Naturally, it is also possible to use the invention in other fields, in particular in vehicle manufacturing and shipbuilding.

### List of reference numerals

- 1: device
- 2: preform
- 3: support means
- 4: centre of curvature
- 5: deposition surface
- 6: rear wall
- 7: inner face
- 8: central axis
- 9: guide means
- 10: guide plate
- 11: guide plate
- 12: end portion
- 13: support portion
- 14: deformation portion
- 15: end portion
- 16: end portion
- 17: deposition means
- 18: central axis
- 19: fibre fabric
- 20: fibre layer
- 21: fibre layer
- 22: fibre layer
- 23: flange portion
- 24: web portion
- 25: flange portion
- 26: binder
- 27: outer face
- 28: arrow
- 29: unidirectional fibre fabric
- 30: arrow
- 31: arrow
- a₁: distance
- a₂: distance
- a₃: distance
- h_{F1}: flange height
- h_{F2}: flange height
- hₛ: web height
- r: radial direction
- R_{B}: bending radius
- R_{FG}: fibre fabric radius of curvature
- u: peripheral direction
- z: vertical direction
- α: angle of curvature
- β: angle of curvature
- γ: flange portion angle
- δ: flange portion angle

## Claims

1. Method for producing a textile preform (2), comprising the following method steps:
manufacturing a multi-layer fibre fabric (19), which comprises a first flange portion (23) and a web portion (24) connected to the first flange portion (23);
deforming a first fibre layer (20) of the first flange portion (23) with respect to the web portion (24), in such a way that the first fibre layer (20) is at a first flange portion angle (δ) to the web portion, a web height (hₛ) of the web portion (24) being set in a variable manner during the deformation of the first fibre layer (20); and
depositing a unidirectional fibre fabric (29) only on the deformed first fibre layer (20) of the first flange portion (23).

2. Method according to claim 1, **characterised in that** after the deposition of the unidirectional fibre fabric (29), a second fibre layer (21) of the first flange portion (23) is deformed with respect to the web portion (24), in such a way that the second fibre layer (21) is at the first flange portion angle (δ) to the web portion (24), the second fibre layer (20) being positioned on the unidirectional fibre fabric (29) after the deformation.

3. Method according to claim 2, **characterised in that** any desired number of fibre layers (20, 21, 22) of the first flange portion (23) are deformed in such a way that the fibre layers (20, 21, 22) are at the first flange portion angle (δ) to the web portion (24), and **in that** after each deformed fibre layer (20, 21, 22), a unidirectional fibre fabric (29) is deposited only on the correspondingly deformed fibre layer (20, 21, 22) of the first flange portion (23).

4. Method according to any one of the preceding claims, **characterised in that** the unidirectional fibre fabric (29) and the deformed fibre layer (20) are fixed by means of a thermoplastic binder (26) after or during the deposition of the unidirectional fibre fabric (19) on the deformed first fibre layer (20) of the first flange portion (23).

5. Method according to any one of the preceding claims, **characterised in that** during the manufacture of the multi-layer fibre fabric (19), a second flange portion (25) is provided, the web portion (24) being arranged between the first flange portion (23) and the second flange portion (25) and interconnecting the flange portions (23, 25).

6. Method according to claim 5, **characterised in that** during the manufacture of the fibre fabric (19), fibre layers (20, 21, 22) of the second flange portion (25) are deformed with respect to the web portion (24) in such a way that the second flange portion (25) is at a second flange portion angle (γ) to the web portion (24) and is of a predetermined second flange height (h_{F2}).

7. Method according to claim 6, **characterised in that** during the manufacture of the multi-layer fibre fabric (19), the fibre layers (20, 21, 22) of the second flange portion (25) and the web portion (24) are fixed at least in portions by means of a thermoplastic binder (26).

8. Method according to any one of the preceding claims, **characterised in that** the first flange portion (23) is trimmed to a predetermined second flange height (h_{F1}).

9. Method according to any one of the preceding claims, **characterised in that** the multi-layer fibre fabric (19) is curved with a fibre fabric radius of curvature (R_{FG}) during the manufacture thereof.

10. Method according to any one of the preceding claims, **characterised in that** the fibre fabric (19) is deposited on a support means (3) before the deformation of the first fibre layer (20) of the first flange portion (23).

11. Method according to claim 10, **characterised in that** the fibre layers (20, 21, 22) of the first flange portion are deformed by means of a guide means (9), the web height (hₛ) of the web portion (24) being set in a variable manner **in that** the guide means (9) is displaced towards or away from the support means (3) in a transverse direction (r) thereof.

12. Device (1) for producing a textile preform (2) comprising:
a support means (3), for having a multi-layer fibre fabric (19) deposited thereon which comprises a first flange portion (23) and a web portion (24) connected to the first flange portion (23);
an adjustable guide means (9) for deforming a first fibre layer (20) of the first flange portion (23) with respect to the web portion (24) in such a way that the first fibre layer (20) is at a first flange portion angle (δ) to the web portion (24), it being possible to set a web height (hₛ) of the web portion (24) in a variable manner during the deformation of the first fibre layer (20); and a deposition means (17) for depositing a unidirectional fibre fabric (29) only on the deformed first fibre layer (20) of the first flange portion (23).

13. Device according to claim 12, **characterised in that** the guide means (9) can be displaced in a longitudinal direction (u) of the support means (3).

14. Device according to either claim 12 or claim 13, **characterised in that** the guide means (9) can be displaced in a transverse direction (r) of the support means (3), it being possible to set the web height (hₛ) of the web portion (24) in a variable manner **in that** the guide means (9) can be displaced towards or away from the support means (3) in the transverse direction (r).

15. Device according to any one of claims 12 to 14, **characterised in that** the support means (3) is curved with a fibre fabric radius of curvature (F_{RG}).

## Patentansprüche

1. Verfahren zur Herstellung eines textilen Vorformlings (2), das die folgenden Verfahrensschritte umfasst:
Fertigen eines mehrlagigen Fasergeleges (19), das einen ersten Flanschabschnitt (23) und einen mit dem ersten Flanschabschnitt (23) verbundenen Stegabschnitt (24) umfasst;
Umformen einer ersten Faserschicht (20) des ersten Flanschabschnitts (23) bezogen auf den Stegabschnitt (24) derart, dass die erste Faserschicht (20) einen ersten Flanschabschnittswinkel (δ) mit dem Stegabschnitt bildet,
wobei eine Steghöhe (hₛ) des Stegabschnitts (24) während der Umformung der ersten Faserschicht (20) veränderlich eingestellt wird; und
Ablegen eines unidirektionalen Fasergeleges (29) ausschließlich auf der umgeformten ersten Faserschicht (20) des ersten Flanschabschnitts (23).

2. Verfahren nach Anspruch 1, **dadurch gekennzeichnet, dass** nach dem Ablegen des unidirektionalen Fasergeleges (29) eine zweite Faserschicht (21) des ersten Flanschabschnitts (23) bezogen auf den Stegabschnitt (24) derart umgeformt wird, dass die zweite Faserschicht (21) den ersten Flanschabschnittswinkel (δ) mit dem Stegabschnitt (24) bildet, wobei die zweite Faserschicht (20) nach dem Umformen auf dem unidirektionalen Fasergelege (29) platziert ist.

3. Verfahren nach Anspruch 2, **dadurch gekennzeichnet, dass** jede beliebige Anzahl von Faserschichten (20, 21, 22) des ersten Flanschabschnitts (23) derart verformt wird, dass die Faserschichten (20, 21, 22) den ersten Flanschabschnittswinkel (δ) mit dem Stegabschnitt (24) bilden, und dadurch, dass nach jeder umgeformten Faserschicht (20, 21, 22) ein unidirektionales Fasergelege (29) ausschließlich auf der entsprechend umgeformten Faserschicht (20, 21, 22) des ersten Flanschabschnitts (23) abgelegt wird.

4. Verfahren nach einem der vorhergehenden Ansprüche, **dadurch gekennzeichnet, dass** das unidirektionale Fasergelege (29) und die umgeformte Faserschicht (20) mittels eines thermoplastischen Binders (26) nach oder während des Ablegens des unidirektionalen Fasergeleges (19) auf der umgeformten ersten Faserschicht (20) des ersten Flanschabschnitts (23) fixiert werden.

5. Verfahren nach einem der vorhergehenden Ansprüche, **dadurch gekennzeichnet, dass** während der Fertigung des mehrlagigen Fasergeleges (19) ein zweiter Flanschabschnitt (25) bereitgestellt wird, wobei der Stegabschnitt (24) zwischen dem ersten Flanschabschnitt (23) und dem zweiten Flanschabschnitt (25) angeordnet wird und die Flanschabschnitte (23, 25) verbindet.

6. Verfahren nach Anspruch 5, **dadurch gekennzeichnet, dass** während der Fertigung des Fasergeleges (19) Faserschichten (20, 21, 22) des zweiten Flanschabschnitts (25) bezogen auf den Stegabschnitt (24) derart umgeformt werden, dass der zweite Flanschabschnitt (25) einen zweiten Flanschabschnittswinkel (γ) mit dem Stegabschnitt (24) bildet und eine vorgegebene zweite Flanschhöhe (h_{F2}) aufweist.

7. Verfahren nach Anspruch 6, **dadurch gekennzeichnet, dass** während der Fertigung des mehrlagigen Fasergeleges (19) die Faserschichten (20, 21, 22) des zweiten Flanschabschnitts (25) und des Stegabschnitts (24) zumindest abschnittsweise mit einem thermoplastischen Binder (26) fixiert werden.

8. Verfahren nach einem der vorhergehenden Ansprüche, **dadurch gekennzeichnet, dass** der erste Flanschabschnitt (23) auf eine vorgegebene zweite Flanschhöhe (h_{F1}) zugeschnitten wird.

9. Verfahren nach einem der vorhergehenden Ansprüche, **dadurch gekennzeichnet, dass** das mehrlagige Fasergelege (19) während seiner Fertigung mit einem Fasergelege-Krümmungsradius (R_{FG}) gekrümmt wird.

10. Verfahren nach einem der vorhergehenden Ansprüche, **dadurch gekennzeichnet, dass** das Fasergelege (19) vor dem Umformen der ersten Faserschicht (20) des ersten Flanschabschnitts (23) auf einem Trägermittel (3) abgelegt wird.

11. Verfahren nach Anspruch 10, **dadurch gekennzeichnet, dass** die Faserschichten (20, 21, 22) des ersten Flanschabschnitts mit einem Führungsmittel (9) umgeformt werden, wobei die Steghöhe (hₛ) des Stegabschnitts (24) veränderlich eingestellt wird, indem das Führungsmittel (9) in Richtung des Trägermittels (3) oder von ihm weg in einer Querrichtung (r) desselben verschoben wird.

12. Vorrichtung (1) zur Herstellung eines textilen Vorformlings (2), umfassend:
ein Trägermittel (3), auf dem ein mehrlagiges Fasergelege (19) abgelegt wird, das einen ersten Flanschabschnitt (23) und einen mit dem ersten Flanschabschnitt (23) verbundenen Stegabschnitt (24) umfasst;
ein verstellbares Führungsmittel (9) zum Umformen einer ersten Faserschicht (20) des ersten Flanschabschnitts (23) bezogen auf den Stegabschnitt (24) derart, dass die erste Faserschicht (20) einen ersten Flanschabschnittswinkel (δ) mit dem Stegabschnitt (24) bildet, wobei es möglich ist, eine Steghöhe (hₛ) des Stegabschnitts (24) während der Umformung der ersten Faserschicht (20) veränderlich einzustellen; und ein Ablegemittel (17) zum Ablegen eines unidirektionalen Fasergeleges (29) ausschließlich auf der umgeformten ersten Faserschicht (20) des ersten Flanschabschnitts (23).

13. Vorrichtung nach Anspruch 12, **dadurch gekennzeichnet, dass** das Führungsmittel (9) in einer Längsrichtung (u) des Trägermittels (3) verschoben werden kann.

14. Vorrichtung nach Anspruch 12 oder Anspruch 13, **dadurch gekennzeichnet, dass** das Führungsmittel (9) in einer Querrichtung (r) des Trägermittels (3) verschoben werden kann, wobei es möglich ist, die Steghöhe (hₛ) des Stegabschnitts (24) veränderlich einzustellen, indem das Führungsmittel (9) in Richtung des Trägermittels (3) oder von ihm weg in der Querrichtung (r) verschoben werden kann.

15. Vorrichtung nach einem der Ansprüche 12 bis 14, **dadurch gekennzeichnet, dass** das Trägermittel (3) mit einem Fasergelege-Krümmungsradius (F_{RG}) gekrümmt ist.

## Revendications

1. Procédé destiné à produire une préforme textile (2), comprenant les étapes de procédé suivantes consistant à :
fabriquer un tissu en fibres multi-couches (19), qui comprend une première partie de flanc (23) et une partie de voile (24) reliée à la première partie de flanc (23) ;
déformer une première couche de fibres (20) de la première partie de flanc (23) par rapport à la partie de voile (24), de telle sorte que la première couche de fibres (20) forme un angle de première partie de flanc
(δ) par rapport à la partie de voile, une hauteur de voile (hₛ) de la partie de voile (24) étant définie de manière variable pendant la déformation de la première couche de fibres (20) ; et
déposer un tissu en fibres unidirectionnelles (29) seulement sur la première couche de fibres déformée (20) de la première partie de flanc (23).

2. Procédé selon la revendication 1, **caractérisé en ce que**, après le dépôt du tissu en fibres unidirectionnelles (29), une seconde couche de fibres (21) de la première partie de flanc (23) est déformée par rapport à la partie de voile (24), de telle sorte que la seconde couche de fibres (21) forme l'angle de première partie de flanc (δ) par rapport à la partie de voile (24), la seconde couche de fibres (20) étant positionnée sur le tissu en fibres unidirectionnelles (29) après la déformation.

3. Procédé selon la revendication 2, **caractérisé en ce qu'**un nombre quelconque de couches de fibres (20, 21, 22) de la première partie de flanc (23) sont déformées de telle sorte que les couches de fibres (20, 21, 22) forment l'angle de première partie de flanc (δ) par rapport à la partie de voile (24), et **en ce que**, après chaque couche de fibres déformée (20, 21, 22), un tissu en fibres unidirectionnelles (29) est déposé seulement sur la couche de fibres (20, 21, 22) déformée de manière correspondante de la première partie de flanc (23).

4. Procédé selon une quelconque des revendications précédentes, **caractérisé en ce que** le tissu en fibres unidirectionnelles (29) et la couche de fibres déformée (20) sont fixés au moyen d'un liant thermoplastique (26) après ou pendant le dépôt du tissu en fibres unidirectionnelles (19) sur la première couche de fibres (20) déformée de la première partie de flanc (23).

5. Procédé selon une quelconque des revendications précédentes, **caractérisé en ce que**, pendant la fabrication du tissu en fibres multi-couches (19), une seconde partie de flanc (25) est fournie, la partie de voile (24) étant agencée entre la première partie de flanc (23) et la seconde partie de flanc (25) et interconnectant les parties de flanc (23, 25).

6. Procédé selon la revendication 5, **caractérisé en ce que**, pendant la fabrication du tissu en fibres (19), des couches de fibres (20, 21, 22) de la seconde partie de flanc (25) sont déformées par rapport à la partie de voile (24) de telle sorte que la seconde partie de flanc (25) forme un angle de seconde partie de flanc (γ) par rapport à la partie de voile (24) et est d'une seconde hauteur de flanc prédéterminée (h_{F2}).

7. Procédé selon la revendication 6, **caractérisé en ce que**, pendant la fabrication du tissu en fibres multi-couches (19), les couches de fibres (20, 21, 22) de la seconde partie de flanc (25) et de la partie de voile (24) sont fixées au moins par section au moyen d'un liant thermoplastique (26).

8. Procédé selon une quelconque des revendications précédentes, **caractérisé en ce que** la première partie de flanc (23) est coupée à une seconde hauteur de flanc prédéterminée (h_{F1}).

9. Procédé selon une quelconque des revendications précédentes, **caractérisé en ce que** le tissu en fibres multi-couches (19) est courbé avec un rayon de courbure de tissu en fibres (R_{FG}) pendant sa fabrication.

10. Procédé selon une quelconque des revendications précédentes, **caractérisé en ce que** le tissu en fibres (19) est déposé sur un moyen de support (3) avant la déformation de la première couche de fibres (20) de la première partie de flanc (23).

11. Procédé selon la revendication 10, **caractérisé en ce que** les couches de fibres (20, 21, 22) de la première partie de flanc sont déformées à l'aide d'un moyen de guidage (9), la hauteur de voile (hₛ) de la partie de voile (24) étant définie de manière variable **en ce que** le moyen de guidage (9) est déplacé vers ou depuis le moyen de support (3) dans sa direction transversale (r).

12. Dispositif (1) destiné à produire une préforme textile (2) comprenant :
un moyen de support (3), sur lequel est déposé un tissu en fibres multi-couches (19) qui comprend une première partie de flanc (23) et une partie de voile (24) reliée à la première partie de flanc (23) ;
un moyen de guidage réglable (9) destiné à déformer une première couche de fibres (20) de la première partie de flanc (23) par rapport à la partie de voile (24) de telle sorte que la première couche de fibres (20) forme un angle de première partie de flanc (δ) par rapport à la partie de voile (24), tout en pouvant définir une hauteur de voile (hₛ) de la partie de voile (24) de manière variable pendant la déformation de la première couche de fibres (20) ; et
un moyen de dépôt (17) destiné à déposer un tissu en fibres unidirectionnelles (29) seulement sur la première couche de fibres déformée (20) de la première partie de flanc (23).

13. Dispositif selon la revendication 12, **caractérisé en ce que** le moyen de guidage (9) peut être déplacé dans une direction longitudinale (u) du moyen de support (3).

14. Dispositif selon la revendication 12 ou la revendication 13, **caractérisé en ce que** le moyen de guidage (9) peut être déplacé dans une direction transversale (r) du moyen de support (3), tout en pouvant définir la hauteur de voile (hₛ) de la partie de voile (24) de manière variable en ce que le moyen de guidage (9) peut être déplacé vers ou depuis le moyen de support (3) dans la direction transversale (r).

15. Dispositif selon une quelconque des revendications 12 à 14, **caractérisé en ce que** le moyen de support (3) est courbé avec un rayon de courbure de tissu en fibres (F_{RG}).
